# EUROPEAN PATENT APPLICATION

(11) **EP 3 910 435 A1**
(43) Date of publication of application: **17.11.2021**
(21) Application number: 20174259.0
(22) Date of filing: 12.05.2020
(51) Int. Cl.: G05B 23/02, H02S 50/00

(54) **SYSTEM, DEVICE AND METHOD FOR DETERMINING SOILING OF PV MODULES**

(71) Applicant: Friesen, Thomas, 1742 Autigny (CH)
(72) Inventor: Friesen, Thomas, 1742 Autigny (CH)
(74) Representative: Schneiter, Sorin

(57) **Abstract**

The present invention concerns an add-on system, method, device and computer readable code for determining soiling of photovoltaic (PV) modules (10) of a PV installation (20). In preferred embodiments, the invention encompasses receiving first data related to a first solar irradiation determined at the site of said installation (20), and receiving second data related to a second solar irradiation at a geographic area where said installation (2) is located, said second data being derived from information provided by a satellite. If the solar irradiation as determined at the site of the installation is lower compared to the solar irradiation as determined from satellite data, the system is configured to find soiling.

## Description

### Technical Field

The present invention relates to a system for determining a parameter related to soiling of photovoltaic (PV) modules, to a method for determining said parameter, to a device that may be used in said system and/or to conduct said method, and to computer readable code and/or an algorithm that may be comprised in said system and/or used for said method.

### Background Art and Problems Solved by the Invention

Particulars or companies investing in a photovoltaic (PV) installation have an interest in that their system is configured and maintained so as to enable a maximum return on investment. In order to do so, it is necessary to make sure that the PV installation works efficiently, that the risk of malfunction and production losses are minimized, and that additional investments, in particular in maintenance work, is optimized.

The efficiency of a PV installation can be evaluated with the performance ratio (PR), which may be used as a quality indicator of a PV installation. The PR is the ratio of the actual and theoretically possible energy outputs. The PR ratio is a number between 0 and 1 (equivalent to 0 to 100%) and as closer the value is to 1, the better the PV installation performs. As a rule of thumb, one may consider a PR>0.8 as good and a PR of 0.65 to 0.8 as normal, whereas a PR of <0.65 as non-satisfactory, requiring a check-up of the system for determining why the system operates at such a low PR.

Several factors can affect the PR negatively, such as defective PV modules (e.g. due to aging) and non-optimal system set-up, e.g. the presence of shading, cabling and connection of modules, and corrosion of connectors, for example. Soiling of PV modules is also an important source of reduction of the PR. If PV modules are soiled, some solar irradiation does not reach the solar cells and electricity production is therefore sub-optimal. Soiling is at least partially due to ongoing deposition of dirt particles, dust, bird droppings, and so forth, on the PV modules and therefore tends to increase with time, often in a more or less linear manner as a function of time.

It is of particular interest to know if and how much PV modules are soiled and to what extent a low PR is due to soiling. For example, in case of a reduced PR but absence of soiling, an operator of a PV installation can use this information to look directly for problems with respect to module defects or cabling, as mentioned above. In case the PV modules are soiled, the operator is interested in knowing the ideal moment of cleaning. Depending on the size and location of the PV installation, the cleaning of the PV modules may be a cost intensive undertaking. The operator is thus interested to know the exact time when cleaning PV modules is optimal in terms of return on investment. The cleaning operation should be conducted when the difference between the gain resulting from cleaning and the costs for the cleaning reaches a maximum.

The state of the art teaches two general concepts for determining soiling. In one concept, two irradiation sensors are used, wherein the cover on one of the two sensors is repeatedly cleaned. By comparing the irradiation as determined between the two sensors, it is possible to determine the reduction of irradiation due to soiling. WO2019158982A1 is an example for a document relying on this concept.

The other concept is software based and uses algorithms for determining soiling. US 2018/0196901 A1 discloses a computer implemented method of quantifying the energy losses of a PV system due to soiling. According to this teaching, soiling is determined from weather data (clear sky, precipitation), and energy actually produced by the system. One may argue that this document does not allow to determine if a reduction of the PR is indeed due to soiling or has other causes.

The system disclosed in US 2019/0312547 is indicated to detect anomalies in a PV system including shading, dust, droppings, pollution, module aging, soldering failure and hardware related issues. Soiling is determined by the computer-implemented analysis of the IV curves obtained from the PV modules of the system.

DE 10 2018 204 150 A1 discloses a sensor module for determining external parameters when monitoring PV installations, wherein the sensor comprises a sensor for determining soiling and two solar cells on the front and back side of the module, probably for bifacial determination of irradiation.

It is an objective of the invention to address the problems depicted above.

It is an objective of the invention to provide a system for qualitatively and preferably quantitatively determining soiling of PV modules.

It is an objective of the invention to provide a system for determining soiling that can be used in combination with existing PV installations, and which may thus be used as a supplement or add-on with any PV system, and which may be added also after installation of a PV system. On the other hand, it is also an objective to provide a system, which can be integrated into PV systems, for example wherein the main software and hardware is at least partially integrated in the data processing entity that is used for operating an inverter of a PV system and/or for MPP tracking.

### Summary of the Invention

The present inventor provides a system for determining efficiency of a PV (photovoltaic) installation and/or soiling of PV modules of said installation.

In an aspect, invention provides a system that is configured to use the solar irradiation as determined from measurements taken by a sensor at a site of the PV modules of said PV installation and the solar irradiation as derived indirectly, for example, from satellite and/or weather data concerning the location of said PV modules, and to determine soiling of the PV modules from a comparison of the two solar irradiations.

In an aspect, invention provides a system for determining soiling and/or efficiency of photovoltaic (PV) modules of a PV installation, the system comprising a data processing entity; said data processing entity being configured to:
- use first data related to a first solar irradiation determined at the site of said installation, said first data being derived from a signal produced by a local irradiation sensor, which is mounted in vicinity of said installation;
- use second data related to a second solar irradiation at a geographic area where said installation is located, said second data being preferably derived from information provided by a satellite;
wherein said system is configured to determining soiling from said first and second data.

In an aspect, invention provides a system for determining a parameter related to soiling of photovoltaic (PV) modules of a PV installation and/or efficiency of the PV installation, the system comprising a data processing entity; said data processing entity being configured to:
- receive, retrieve and/or use first data related to a first solar irradiation determined at the site of said installation, said first data being derived from a signal produced by a local irradiation sensor, which is mounted in vicinity of said installation;
- receive, retrieve and/or use second data related to a second solar irradiation at a geographic area where said installation is located, said second data being derived from information provided by a satellite;
wherein said system is configured to make use of an algorithm using said first and second data for determining said parameter related to soiling.

In an aspect, invention provides a system comprising (1) an irradiation sensor for determining a first solar irradiation at the site of a PV installation, (2) a data processing entity configured to use said first solar irradiation and further to use a second solar irradiation as derived from information provided by a satellite, and to determine soiling from said first and second solar irradiations. Preferably, the system further comprises (3) software configured to make available to an owner, user and/or operator of said PV installation information related to soiling of PV modules of said installation.

In an aspect, invention provides a method for determining soiling of photovoltaic (PV) modules of a PV installation and/or efficiency of the PV installation, the method comprising:
- using first data related to a first solar irradiation determined at the site of said installation, said first data being derived from a signal produced by a local irradiation sensor, which is mounted in vicinity of said installation;
- using second data related to a second solar irradiation at a geographic area where said installation is located, said second data being preferably derived from information provided by a satellite;
   - determining soiling from said first and second data.

In an aspect, the invention provides a method for determining a parameter related to soiling of one or more PV modules of a PV installation and/or efficiency of the PV installation, the method comprising:
- providing a device comprising an irradiation sensor in vicinity of said PV installation and using said irradiation sensor to generate first data related to the solar irradiation in vicinity of said PV installation;
- retrieving second data, said second data being related to the solar irradiation at a geographic area where said installation is located, said second data being derived from information provided by a satellite;
determining soiling of said PV modules if solar irradiation as determined from said first data is lower than solar irradiation as determined from said second data.

In an aspect, the invention provides a device suitable for measuring solar irradiation at a site of a PV installation, the device comprising: (i) an irradiation sensor; (ii) one or more solar cells for providing electricity to one or more electronic components of the device; (iii) a first temperature sensor; (iv) electronics suitable for generating first data based on signals received from one or more selected from the group of said irradiation sensor, said first temperature sensor, and from an optional second temperature sensor; (v) a wireless communication module; and, optionally, (vi) an input for receiving a signal produced from a second temperature sensor, said signal produced by said second temperature sensor being related to the temperature in a selected PV module of said PV installation. The device is also useful in the determination of the and/or efficiency of the PV installation.

In an aspect, the invention provides a device suitable for measuring solar irradiation at a site of interest and/or for assisting in the determination of parameters related to soiling of a PV installation comprising one or more PV modules, and/or in the determination efficiency of the PV installation, the device comprising:
- an irradiation sensor;
- one or more solar cells for providing electricity to one or more electronic components of the device;
- a first temperature sensor to measure the temperature of the irradiation sensor;
- optionally, a second temperature sensor, said second temperature sensor being destined to produce a signal related to the temperature in a selected PV module of said PV installation;
- electronics suitable for generating first data based on signals received from one or more selected from the group of said irradiation sensor, said first temperature sensor, and optionally, said second temperature sensor;
- a wireless communication module, suitable for transmitting said first data wirelessly and/or for broadcasting said data.

In an aspect, the invention provides a computer program for determining a parameter related to efficiency of a PV installation and/or the soiling of photovoltaic (PV) modules of the installation, wherein said computer program comprises instructions to compare first data related to a first solar irradiation measured at a location of said PV modules with second data related to said solar irradiation as determined from information provided by a satellite and to determine, from said comparison, soiling of said photovoltaic (PV) modules.

In an aspect, the invention provides a system and/or a method suitable to determine one or more parameters related to the efficiency performance ratio of a PV installation.

In an aspect, the invention provides a method for determining the efficiency and preferably the performance ratio (PR) of a PV installation, the method comprising:
- obtaining the energy produced by the PV installation (E eff),
- determining the energy that the PV installation can theoretically produce, corresponding to the theoretical energy production (E theo),
   - wherein determining the theoretical energy production (E theo) comprises determining solar irradiation at the site of the installation and measuring the temperature of one or more PV modules of the PV installation.

In some aspects, the method of the invention is for determines both, soiling of PV modules of a PV installation and efficiency of a PV installation. In an aspect, the system of the invention is configured to determine both, soiling of PV modules and/or efficiency of a PV installation.

In an aspect, the invention provides a system and/or a method suitable to determine the performance ratio of a PV installation, preferably the temperature corrected performance ratio.

Further aspects and preferred embodiments of the invention are defined herein below and in the appended claims. Further features and advantages of the invention will become apparent to the skilled person from the description of the preferred embodiments given below.

### Brief Description of the Drawings

**Figure 1** schematically shows the system for determining efficiency of a PV installation and/or of soiling of PV modules of said installation in accordance with an embodiment of the invention.
**Figure 2** schematically shows an embodiment of a device according to an embodiment of the invention.
**Figures 3** **A** and **3 B** are photographs of an embodiment of the device of the invention. Fig. 3A is a top view showing solar cells and irradiation sensor, and Fig 3B shows the bottom part with remaining electronics and the optional temperature sensor.
**Figure 4** is a graph that illustrates the method for determining a parameter related to soiling of PV panels in accordance with an embodiment of the invention.
**Figure 5** graphically illustrates an embodiment of the system and/or method of the invention.

Hereinafter, preferred embodiments of the device of the invention are described, in order to illustrate the invention, without any intention to limit the scope of the present invention.

### Detailed Description of the Preferred Embodiments

In some embodiments, the present invention is concerned with efficiency of PV systems and installations, and more specifically with determining soiling of PV panels and the impact of soiling on the efficiency of the system. Furthermore, the invention is concerned with optimizing PV systems and installations, in particular optimizing investments in the maintenance of the system, in particular in the cleaning of the PV modules of the system.

For the purpose of the present specification, a "photovoltaic (PV) installation" or "PV installation" is an installation comprising one or more PV modules and generally an inverter for converting direct current (DC) as produced from said one or more PV modules into a utility frequency alternating current (AC). Preferably, the inverter comprises firmware and/or software, for example for maximum power point tracking (MPPT) and optionally for conducting other operations that optimize the power production of the PV installation.

In an embodiment, reference numeral 21 may encompass an entire data processing entity and/or computer, which comprises the inverter and further hard and/or software, and/or and interface with a user, for example enabling a user to configure the system, and/or obtain data related to the performance of the PV installation. In an embodiment, reference numeral 21 refers to a data processing system that is capable of establishing a connection to the internet and to provide data to the system 100 of the invention, preferably to the data processing entity 110.

For the purpose of the present specification, a "PV module", is an assembly of PV cells suitable for installation, for example on a roof. Generally, in the PV module, the solar cells are mounted in a laminated sandwich structure. For the purpose of the present specification, the term "PV module" also encompasses assemblies of PV modules forming a panel, sometime referred to a PV panels.

For the purpose of the present specification, the expression "comprising" and its various grammatical forms is intended to mean "includes, amongst others". It is not intended to mean "consists only of".

In some embodiments, the invention relates to a system, device, method and/or computer program "for determining a parameter related to soiling". The parameter may be a variable that can assume two values, such as 0 and 1 (or any pair such as 0 and 10, 0% and 100%, for example), where 0 may indicate an absence of soiling or maximum soiling and 1 may indicate minimum soiling, or vice versa.

In other embodiments, the parameter may represent a continuous or discrete number of values for gradually indicating soiling. Such values may be provided within a predefined range, such as 0 to 1, 0 to 10, 0% to 100%, for example. Of course, the end points of the range may be arbitrarily determined as deemed useful as the scale is generally selected for representing purposes. Preferably, the expression "related to" refers to the possibility that the indicated condition or status may be directly derived from said parameter. Preferably, no data other than said parameter are required for determining said condition or status.

Preferably, the expression "parameter related to soiling" refers to a parameter that is specific to the indicated condition or status, here "soiling". For example, the "parameter related to soiling" does not allow explaining (a reduction of) the performance ratio PR of the PV system due to other reasons than soiling. In this manner, a reduction of the PR of the PV system that cannot be explained by soiling as determined by said "parameter related to soiling" indicates directly that the PV system has a problem other than soiling (e.g. aging of or damage to components of the system, problem at the inverter, etc). Therefore, a "parameter related to soiling" is preferably a parameter "related exclusively to soiling", in particular in as far as the assessment of the efficiency and/or performance of the PV installation is concerned.

In an embodiment, the expression "a parameter related to soiling" may be replaced by "soiling".

In the same sense, the expression "related to" in the larger expressions "first data related to a first solar irradiation" and "second data related to a second solar irradiation" is intended to mean that said solar irradiation (preferably as W/m²) can be directly derived from said data, for example by way of a given function or formula.

In some embodiments, the expression "first data related to a first solar irradiation" may be replaced simply by "first solar irradiation". At the same time, or independently, the expression "second data related to a second solar irradiation" may be replaced by "a second solar irradiation".

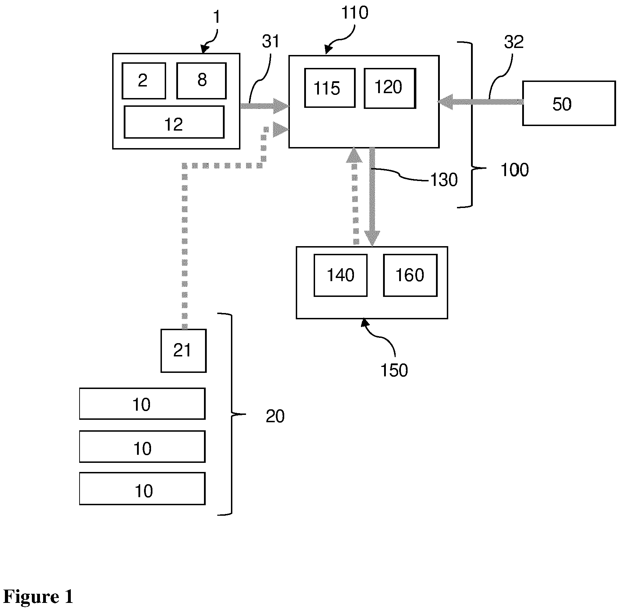

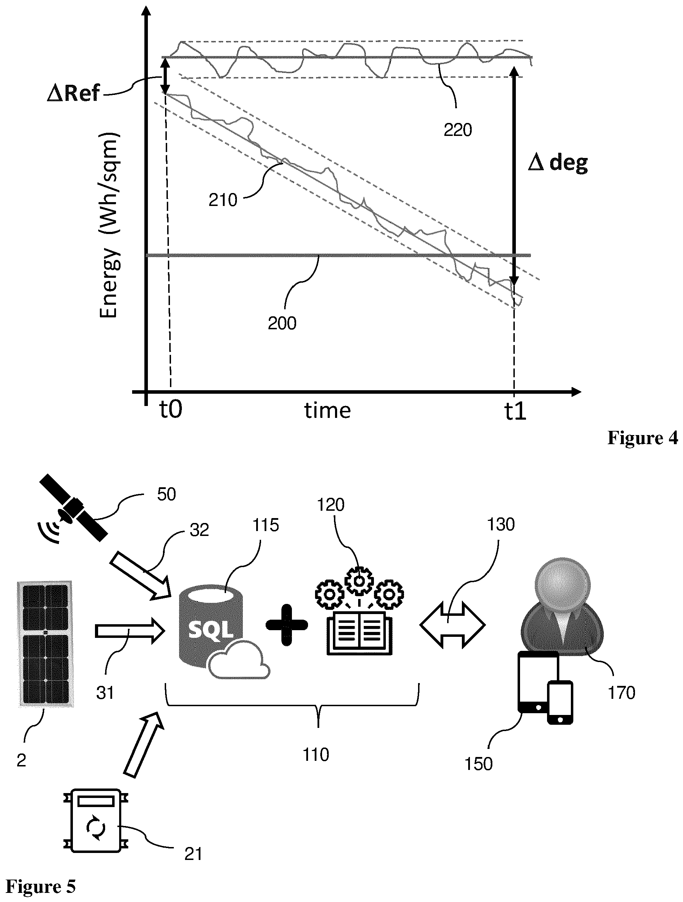

**Figure 1** schematically illustrates a PV system 20 equipped to work with the system 100 according to an embodiment of the invention. **Figure 5** graphically illustrates the system in accordance with an embodiment of the invention. In the embodiment shown, the system 100 comprises a data processing entity 110 and a device 1 comprising an irradiation sensor 2.

Preferably, the data processing entity 110 is a data processing apparatus or system, preferably a digital and/or computer-type data processing apparatus or system, for example a server, in particular a web server, personal computer, laptop, tablet, smartphone for example. In an embodiment, the data processing entity 110 is integrated in the data processing system for controlling an inverter of the PV installation, for example. In these embodiments, the data processing entity may be provided at the site of the PV installation. In embodiments where the data processing entity 110 is a server, the location may be anywhere, in as far as an Internet connection is available.

The data processing entity 110 preferably comprises a memory or storage medium 115, preferably a database 115. Furthermore, the data processing entity 110 is preferably configured to carry out computer implemented methods, such as to carry out instructions that can be carried out by a computer.

In a preferred embodiment, the system of the invention further comprises: a device 1 comprising said local irradiation sensor 2; and a computer readable medium 115 configured to make said parameter related to soiling, and in particular said output information 130, available to an owner and/or user 170 of said PV installation 20, preferably via the internet.

Preferably, the data processing entity 110 comprises and/or runs one or more communication protocols as necessary, preferably internet communication protocols, which allows the data processing entity to communicate with one or more selected from the group consisting of an external computing device 150, an external server 50, and with the device 1. Preferably, the data processing entity 110, the computing device 150, the external server 50, and the device 1 are configured to make use of one or more networks, preferably the internet, to communicate.

The data processing entity 110 preferably comprises an algorithm 120, for example in the form of instructions that can be executed by a computer and which contain said algorithm 120.

The data processing entity 110, and in particular the computer executable instructions 130, are preferably configured to use said first and second data 31, 32 for determining said parameter related to soiling.

As can be seen from Fig. 5, the memory or storage medium 115 and the algorithm 120 do not need but may be at the same location. Furthermore, different parts of the algorithm 120 may be conducted at different locations. One or both of the storage medium 115 and the algorithm 120 may be provided on the cloud (internet).

Preferably, said data processing entity 110 is configured to receive and/or retrieve first and second data 31, 32 110 in an automated, computer implemented process, preferably by way of computer executable instructions. In an embodiment, the data processing entity 110 establishes a connection, via the internet, with an external server or data provider 50, on which said second data 32 are stored, and downloads and/or transfers the second data 32 and stores it on a memory, preferably in the database 115. Alternatively, the system of the invention is configured so that the data provider 50 uploads the second data on the data processing entity 110. One may also envisage that said second data is manually transferred to the data processing entity 110, for example via a portable storage entity, such as a USB stick, or is manually downloaded via a user interface of the data processing entity 110.

Preferably, the first data 31 is also transferred in an automated, computer implemented process, to the data processing entity 110. In a preferred embodiment, the device 1 comprises, in addition to the sensor 2, a communication module 12, preferably a wireless communication module 12, which sends or broadcasts the first data 31 to the data processing entity 110. For example, a WIFI connection is established between the device 1 and a router of at the site of the PV installation (not shown), and the first data is transferred via the router and the internet to the data processing entity. In this case, it is necessary to establish a connection between the device 1 and the router, when putting the system in place with respect to a particular PV installation.

In another embodiment, the device 1 is equipped and configured to establish a cellular network connection (3G, 4G, 5G, etc), such that the communication module 12 can transfer said data via said cellular network and the internet to the data processing entity 110. In some embodiments, the device 1 may use any one of the two processes (local wifi, cellular network), at the option of a user. One may also envisage a cabled connection from the device 1 to the router, such that transfer of said first data 31 is not wireless.

In an embodiment, said data processing entity 110 comprises a database or memory 115 and computer readable instructions for conducting said algorithm 120. Preferably, said data processing entity 110 is configured to generate and/or make available output information 130 to an application software 140 run by an owner and/or user 170 of said PV installation 20.

As mentioned above, the computer readable instructions and/or algorithm are configured to determine said parameter related to soiling. Preferred embodiments of the algorithm are disclosed elsewhere in this specification. The data processing entity 110 is preferably configured to generate output information 130 from said parameter. The output information 130 is preferably information related to said soiling of the PV modules.

In an embodiment, said output information 130 may be selected from one, several or all of the group consisting of:
(i) absence of soiling,
(ii) presence of soiling,
(iii) a degree of soiling,
(iv) change of soiling, in particular increase of soiling, over time, and
(iv) reaching of a threshold value indicating that an extent of soiling negatively affects performance of said PV installation 20 such that cleaning of the PV modules 20 of said PV installation 20 is recommended.

For the avoidance of doubt, it is clarified that the expression "a parameter" and various grammatical forms thereof includes the plural, such that said parameter may be a number of variables, numbers and/or values, and/or such that said expression can be understood to read "at least one parameter".

The output information 130 may be graphically and/or numerically represented, for example. One may also envisage that the output information is provided in the form of audible information, for example as spoken words. In this case, the output entity 160 is preferably a loudspeaker, a headphone or earspeaker, for example.

The system of the invention 100 is preferably configured to render the output information available to a user.

The system 100 may comprise or may be used with an application software 140, which preferably comprises computer readable instructions. The application software is preferably installed on a computing device 150, which comprises a user interface, making it possible to make the output information 130 visible to the user 170. In an embodiment, the computing device 140 is external and/or different from the data processing entity 110.

The application software is preferably run on the computing device 150 or data processing apparatus 150 that comprises or is connected to an output unit 160, preferably a screen 160. In an embodiment, the computing device 150 is selected from the group consisting of a personal computer, a laptop, a notebook, a computer tablet, and a smartphone, for example. The computing device 150 is preferably a device of the user, and the user can thus use her or his own computing device 150 in order to access the data or information provided in accordance with the invention, such as information related to soiling, efficiency of the PV installation, the performance ratio and so forth.

In a preferred embodiment, the system of the invention comprises or is configured to be accessible via, and/or to interact, with the application software 140 of a computing device 150 comprising an output unit 160, preferably a screen 160, wherein said computing device 150 is preferably accessible by an owner and/or user 170 of said PV installation 20, said application software 140 being configured to receive and/or generate output information 130 and to make said output information 130 available to said owner and/or user 170.

The data processing entity 110, and in particular data stored on the computer readable medium 115, is preferably accessible via the Internet and is preferably provided so as to make available the parameter and/or output information 130 in a user-specific manner, in particular to the user, operator and/or owner of the PV installation.

In a preferred embodiment, said data processing entity 110 a webserver, and/or said computer readable medium 115 is comprised on a webserver. Preferably, the data processing entity 110 comprises an access module or program providing an access control. Preferably, the data processing entity 110 is configured to provide access to the output information 130 upon a log-in requiring one or more selected from user identification, password entry, authentication and the like.

Preferably, the data processing entity 110 is configured to provide access in a user-specific manner, preferably in that a particular user has access specifically to the output information provided for one or more specific PV installations 20, for which the particular has access rights, generally because the user is the owner or operator of said one or more specific PV installations 20. In an embodiment, the data processing entity 110 provides user accounts, where each user has access to information related to one or more PV installations associated with the specific user account.

A user 170 may download, install and run the application software 140 on the computing device 150. For example, the application software 140 may be an "app". The application software 140 outputs data via the output device, preferably a screen 160, thereby communicating the information related to soiling of the PV modules.

In an embodiment, the application software 140 is a web browser or internet browser (e.g. MS Edge, Safari, Google Chrome, Firefox, Explorer, and the like). An advantage of using a web browser is that no particular software needs to be installed on the computing device 150. The application software may be directly connected by entering a website via the internet to the data processing entity 110, where data obtained with respect of a particular PV installation is stored. Preferably, for every PV installation, a dedicated and area of the computer readable medium is provided, to which only the owner or user of the respective PV installation has access, for example via a user login.

In some embodiment, the application software may be a dedicated software 140. The dedicated software may be dedicated to provide concerning the soiling, efficiency, performance, and the like, of the PV installation, in particular including data as rendered accessible via said data processing entity 110. In case it is a dedicated software, the application software 140 may be provided so that it can be downloaded via the Internet, for example via an app store or from the data processing entity 110, for example.

In an embodiment, the computing device 150 and/or the output unit 160 are not be part of the system 100 of the invention. In another embodiment, the computing device 150 and the output unit 160 are part of the system 100. In an embodiment, the computing device 150 and the data processing entity 110 are the same, for example the same computer, tablet or server. In other embodiments, they are separate entities that can operate independently.

In an embodiment, the application software 140 is not part of the system of the invention. For example, the application software 140 may be a conventional web browser software, as indicated above.

In other embodiments, the application software 140 is part of the system of the invention, for example if the software 140 is a dedicated software, specifically configured to be used to work the present invention, for example to connect to the data processing entity 110 and, preferably, to retrieve information related to a particular PV installation.

In case the application software 140 is part of the system of the invention, it can be commercialized along with, for example, the device 1. In some embodiments, the components of the invention that are commercialized concern the device 1, and access to data stored with respect to one or more PV installations on said data processing entity 110. The feature of providing access to said data related to a particular PV installation is preferably included as a service of the concept of the invention.

In an embodiment, the invention provides a device 1. The device 1 is preferably part of the system 100. The device 1 preferably comprises at least the irradiation sensor 2 for measuring irradiation and the communication module 12 for transferring irradiation data to the data processing entity 110. In a preferred embodiment, the system 100 preferably comprises a device 1 comprising said local irradiation sensor 2.

In a preferred embodiment, said device is an entity or assembly 1 that is separate from said PV installation 20 and/or which is not required for the operation of the PV installation 20. This is illustrated in Fig. 1, which shows device 1 as a separate entity.

In an embodiment, the device 1 is not integrated in a PV module or PV panel of the PV installation. Preferably, the device 1 is capable of functioning autonomously and/or independently from the PV installation. In some embodiments, the device 1 may continue working, for example, when operation of the PV installation is interrupted.

The device 1 is preferably provided so that it can be used in combination with a preexisting PV installation and/or with PV installations and PV modules commercialized and installed by different providers and/or producers. Preferably, the device may be used with PV modules having different specifications.

On the other hand, the device 1 may also be integrated in a PV installation. For example, the device 1 may be integrated in a PV module. As mentioned herein above, it is also possible to provide a data processing system 110 which also comprises the inverter 21 and software or firmware required for operating the inverter and/or controlling the operation of the PV installation.

In embodiments where the device is an entity that is separate from the PV installation, the invention envisages an assembly comprising the devices and preferably further comprising attachment equipment, such as fixing means, for example brackets, terminals, connectors, screws and the like. In an embodiment, the assembly comprises one or more selected from the group consisting of fixing brackets, a clasp, a connector and a fixing terminal.

In an embodiment, the device 1 further comprises mounting equipment for attaching said device 1 or a casing 9 thereof to one or both selected from: (i) a particular PV module 10 of said installation 20 and (ii) to a support structure, in particular a rooftop, on which said one or more PV module 10 of said installation 20 are fixed.

In an embodiment, the device 1 is intended and/or configured to be mounted in vicinity of a PV module of said installation. Preferably the device 1 is intended and/or configured to be mounted at the same spatial orientation as one or more PV modules of said installation.

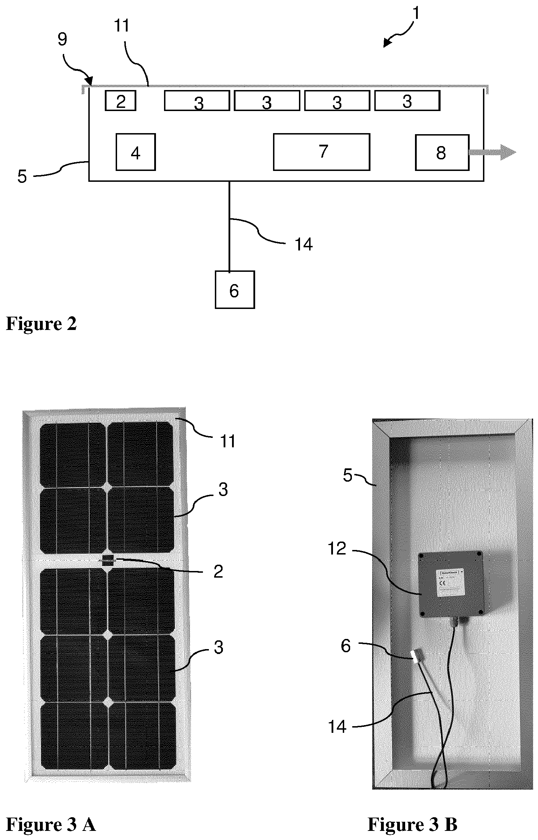

The device 1 of the invention is preferably provided and/or conceived for being attached at the same spatial orientation as the PV modules 10. In particular, device 1 is preferably fixed so that the surface of the top cover 11 (Fig. 2) is situated in a plane that is the same or that is parallel to the plane of the top surface of said PV modules 10. If the PV installation encompasses PV modules that have different orientations, it is preferred that the orientation with minimum inclination (maximum irradiation) is chosen, and/or the orientation of the PV modules that cover the largest area.

The afore mentioned attachment equipment is preferably provided so as to enable attachment at the indicated same orientation. In some embodiments, the attachment equipment may enable the orientation of the device to be adjusted. The attachment equipment may comprise adjustment means for adjusting the orientation.

In an embodiment, said device 1 is intended and/or configured to be mounted in vicinity of a particular PV module 10. As indicated above, the device 1 is preferably attached to a PV module 10, or on the rooftop on which the PV modules are mounted.

Preferably, the term "in vicinity" refers to a position that is sufficiently close so that solar irradiation data measured by the sensor 2 corresponds substantially to the solar irradiation of the PV modules. Preferably, "in vicinity" refers to a distance of 50 m or less, more preferably 30 m or less, even more preferably 20 m or less, 5 m or less, and most preferably 2 m or less, such as 1 m or less, wherein the indicated distance is the distance between the device 1 and the PV module of the installation 20 that is closest to the device 1.

In a preferred embodiment, the device 1 comprises a housing 9 comprising a transparent cover 11, wherein said irradiation sensor 2 is inside and/or attached to said housing 9, wherein said device further comprises a first temperature sensor 4 for measuring the temperature of the irradiation sensor 2. Preferably, the device comprises a second temperature sensor 6 suitable for measuring the temperature of a particular PV module 10 in vicinity to said device 1.

**Figure 2** shows an embodiment of the device 1 in more detail, and **Figures 3A** and **3B** show photographs of an exemplary device. As can be seen, the device 1 preferably comprises a casing 9. The casing may have an overall box-like aspect. The purpose of the casing is to confine and protect the components of the device 1. Preferably, the casing 9 comprises a top cover or lid 11 comprising a transparent part. Preferably, the entire top 11 of the casing 9 is transparent, so as to allow light enter and irradiate the irradiation sensor 2. When solar cells 3 are present, the cover 9 preferably lets light pass so that said solar cells 3 can be illuminated. The cover 9 may be made from transparent plastic or from transparent glass, for example.

The bottom part (or open-box-like part) 5 of the device 1 does generally not need to comprise any transparent parts, as the solar cells 3 are oriented towards the side of the transparent cover 9. Therefore, the bottom part 5 of the casing 9 is preferably not transparent. The part 5 may be made from non-transparent plastic or metal, for example.

In a preferred embodiment, the device 1 has further components, which are indicated in a summary manner with reference numeral 12 in Figure 1. As can be seen from Fig. 2, the further components are preferably selected from at least one source of electric energy 3, a first temperature sensor 4, and electronics 7 for controlling the operation of the device

In Fig. 3B, the first temperature sensor 4 and the communication module 8 are contained in the box 12 comprising the further electronic components. The irradiation sensor 2 and solar cells 3 are visible in Fig. 3A, which shows the lid 11, in which the solar cells and irradiation sensor are integrated.

In an embodiment, the further components also comprise a second temperature sensor 6. The second temperature sensor 6 is preferably connected via a cable 14 to the housing 9 of the device 1 and is thus external to the housing 9. The second temperature sensor 6, if present, is provided for determining the temperature of a PV module of the PV installation.

The optional second temperature sensor 6 can be used, together from the energy produced by the PV installation 20, to assess the efficiency of the PV installation. It is that the irradiation is determined by sensor 2 and is also available from the satellite derived data 32, and the temperature of the PV modules 10 affects the power generated by the modules. It is noted that the temperature as measured in the device 1, by temperature sensor 4, and the temperature of the PV modules 10 cannot be assumed to be the same, since the temperature depends on factors like the color, materials, mounting condition, the extent of air circulation, possibly the size and other particulars of the PV panel. Therefore, in accordance with some embodiments, it is desirable to specifically measure the temperature of or in the PV modules 10.

In particular, the system 100 of the invention may be configured to be fed with data from the inverter 21 or from an electricity meter so that the electric energy produced by the PV installation is known to the system. Taking into account the irradiation as determined by sensor 2 and the temperature of the PV modules as measured from sensor 6, it is possible to determine the theoretical energy production. This is discussed elsewhere in this specification in more detail.

In an embodiment, the device 1 comprises one or more solar cells 3. The solar cells 3 preferably provide the electric energy required for operating the device 1. A rechargeable battery need not (but may) be present in the device. The device may be configured to operate once a threshold electric power is produced by the solar cells 3, in other words starting from a particular irradiation. Preferably, the device 1 is configured to operate when irradiation (irradiance) is 20 W/m² or higher, preferably 30 W/m² or higher, most preferably 40 W/m² or higher, for example 50 W/m² or higher. The advantage of setting a comparatively higher power production is that the signals obtained from the sensors (2, 4 and/or 6) are more precise and/or reliable, in that the measurement error is minimized. On the other hand, the disadvantage is of course that the requirements (weather conditions) for the device 1 to be operational are more restrictive.

In an embodiment, the device 1 comprises electronic 7 for operating the electronic components of the device. The electronics may comprise a microprocessor, analog-to-digital convertors, and the like. The electronic 7 are configured from receiving the signals from the one or more sensors 2, 4, 6 and to control the communication module 8 so that the measured data is sent, preferably wirelessly, to the data processing entity 110.

The electronics 7 may be provided so as to determine and/or calculate some values from the signals, such as the temperature of the device and/or of the reference PV module, the short-circuit current (Isc) of the sensor 2, the irradiation and so forth.

In a preferred embodiment, said device 1 further comprises:
- one or more solar cells 3 for providing electricity to one or more electronic components of the device;
- electronics 7 suitable for generating said first data based on signals received from said irradiation sensor 2, said first temperature sensor 4, and optionally said second temperature sensor 6;
- a wireless communication module 8, suitable for transmitting said first data wirelessly and/or for broadcasting said data.

The device's 1 configuration to operate wirelessly by wifi or cellular network connection has been discussed previously. This communication is preferably provided by said wireless communication module 8. In some embodiments, the wireless communication module 8 broadcasts data, and a router or other entity is configured to recognize the data originating from communication module 8 and to transfer said data to the data processing entity 110, preferably via the internet or via a local network.

In an embodiment, said first data comprise one or more selected from the group consisting of: the short-circuit current (Isc) of the irradiation sensor 2, the temperature (T) in the device 1, the irradiation (W/m²), and optionally the temperature (Tref) in a particular PV module 10.

In an embodiment, said first data comprise one or both selected from the temperature (T) in the device 1 and the solar irradiation (W/m²). Preferably, the temperature T is obtained from the signal produced by the temperature sensor 4 and the solar irradiation is obtained from the irradiation sensor 2. In an embodiment, said first data comprise said solar irradiation as determined from the signals produced by said irradiation sensor 2. Tref is preferably obtained from the signal produced by the temperature sensor 6.

The system 100 of the invention preferably comprises and/or runs an algorithm 120, and preferably computer readable instructions so as to control the algorithm, provide data and variables required by the algorithm, and to generate output information 130 as a result or output of the algorithm. Preferably, the system 100 is configured to render said output information available, for example as a data provider. In a preferred embodiment, at least part, but preferably the entire algorithm is conducted by the data processing entity 110.

In general terms, one may say that the algorithm compares irradiation values as derived from satellite data with irradiation value as measured by sensor 2 in vicinity of the PV modules, and uses the comparison to assess the soiling of the PV modules.

As the skilled person will understand, the comparison of said first and second data requires that both data concern the same moment in time and the same location (the location of the PV modules). If the methods for establishing solar irradiation from sensor data and/or from satellite data were both completely accurate, the values of irradiation as determined independently from two different sources should be identical, or more precisely, differ from each other not more than as accounted for by the intrinsic and systematic measurement errors.

Generally, when the irradiation sensor 2 and more specifically, the device 1 in which the irradiation sensor 2 is housed, is soiled in parallel and/or at the same time (over time) with the PV modules 10. As shown in Fig. 2, the sensor 2 is preferably provided in a casing 9 comprising a transparent cover 11, such that soiling of the cover 9 will reduce the irradiation measured by sensor 2. On the other hand, the irradiation as determined from satellite data (said second data) is not affected by soiling of the sensor 2, device 1 and/or cover 9. Therefore, an irradiation measured by the sensor 2 (first data) that is comparatively lower than an irradiation determined from satellite data (second data) may be used as an indication for soiling of the PV modules. The present inventor proposes that the difference in irradiation as determined by the two independent sources for solar irradiation can be used to determine soiling of the PV modules qualitatively (presence or absence) and preferably also quantitatively.

In an embodiment, the system of the and/or the algorithm of the invention is configured to determine the presence of soiling if the solar irradiation derived from said first data is lower than the solar irradiation derived from said second data.

The present application envisages several manners of conducting a parameter related to soiling based on said first and second data. Similarly, the invention is not limited to a particular algorithm for assessing soiling based on said sensor data and satellite data. For the purpose of illustration, an exemplary algorithm will be discussed in more detail.

In an embodiment, the algorithm, or computer readable instructions used to implement the algorithm, is configured to determine a reference value (R ref).

The reference value (R ref) may also be referred to as a reference comparison value, and represents a proportion, preferably a ratio, of irradiation as determined by the two independent sources (sensor 2 and satellite). For example, the ratio is SENSOR / SAT, wherein SENSOR represents irradiation derived from the sensor 2, and SAT represents irradiation as derived from satellite data.

In a preferred embodiment, said reference value is an initial comparison value obtained by computation from said first and second data. In a preferred embodiment, this may (but need necessarily not) be conducted at a moment when the (PV) modules 10 are supposed not to be soiled, more preferably by computing a proportion of (a) the first solar irradiation determined from said first data and (b) the solar irradiation as derived from said second data.

In a preferred embodiment, said system is configured to determine said reference value (R ref) when the system is put in operation or started-up with respect to a particular PV installation 20. In an embodiment, the said system is configured to determine said reference value (R ref) when the PV modules 10 have just been cleaned. In an embodiment, the system 100 of the invention is configured to determine by relative measurements. Therefore, it is not a requirement for the invention to work or to be set up that the cover 11 and the surface of the PV modules are cleaned at the same time and/or that there is absence of soiling of both, said cover 11 (or device 1 or sensor 2) and said PV modules 10. The invention also works if there is no particular cleaning when the system is set up.

Generally, R ref is preferably determined when there is no soiling. Therefore, in some embodiments, cleaning of the PV modules and/or of the sensor cover is preferred. Preferably, at R ref, the solar irradiation as determined by sensor 2 compared to the solar irradiation as determined from the satellite data is at a maximum (or minimum) value. A maximum value applies, for example, in situations where if R ref is SENSOR / SAT.

Independently of the algorithm used, irradiation may be determined at a moment where the sky is clean.

In an embodiment, the algorithm may be divided in several parts, having different functions, such as first, second and third algorithms, for example.

A first algorithm may be provided for determining R ref. In order to do so, the algorithm compares said first and second data (related to same moment in time) over a certain period, and at the end establishes said R ref. Preferably, said R ref is determined by way of statistical methods, so as to have a value that is reproducible and most closely reflects the correct reference value. The statistical methods may include the removal of extreme values (peaks) when assessing R ref and remove anormal and/or exceptional deviations from solar irradiations as determined from said first and second data and other analytical methods. It is also noted that said R ref is preferably established based on data corresponding to a minimum accumulated irradiation (radiant exposure), for example taken over some time, or other information as duration or clear sky index. Preferably, for determining R ref, there is no snow lying on the PV modules. In this manner, the goal is to obtain a representative and/or reliable R ref value. In some embodiments, the system of the invention 100, in particular the algorithm 120, is configured to detect automatically when the situation for calculating R ref is not optimal, due to the presence of diffuse light, presence of extreme values in the irradiation, and so forth.

In an embodiment, said first algorithm is configured to run until a minimum irradiation data could be measured on the sensor. Preferably, the said first algorithm is configured to run until data related to a cumulated irradiated energy (radiant exposure) of at least 10kWh/m² have been collected, preferably at least 20kWh/m², more preferably at least 30kWh/m², most preferably at least 50kWh/m². In other words, the indicated irradiation preferably occurs while the device operates and thus actually measures data. This is generally the case when the irradiance is sufficiently high to allow the device to operate based on the solar cells 3 which are preferably contained in the device (e.g. when irradiance is 20W/m² or higher, as indicated elsewhere in this specification).

Said first algorithm may be run for a certain, preferably limited amount of time, for example for a period of time of 1 day to 3 months, more preferably 2 days to 2 months, most preferably 3 days to 3 weeks, for example. Preferably, during said period, a minimum radiant exposure has occurred during which measurements could be taken, as indicated above.

In a preferred embodiment, said reference (R ref) value is determined during a limited period of time of 1 day to 3 months, preferably when the system is put in operation and/or started-up with respect to a particular PV installation 20, by:
- collecting said first and second data during said limited period of time, and
- statistically evaluating said first and second data during said limited period of time and determining said reference value (R ref) so as to represent a stable, constant and/or reliable value resulting from the computation including said first data and said second data.

Once a R ref value has been determined, the system may assess soiling of PV modules in the following time. Preferably, comparison values are established in the same or a similar manner as said R ref has been determined, preferably by identifying a representative, stable, constant and/or reliable comparison value, as described above for R ref. From these comparison values one may establish R deg, which represents the difference of ratio of SENSOR / SAT compared with the ratio obtained when R ref was established.

The part after establishing R ref, may be considered as a second algorithm or second part of the algorithm, which is configured to be executed continuously during the exploitation of the PV installation 20. It is during this phase that the method of the invention can assess soiling of PV modules 10 and/or the efficiency of the PV installation 20.

With time passing, R deg is supposed to reflect a decreasing solar irradiation as determined from the sensor 2.

**Figure 4** is a graph showing irradiation (radiant energy) over time as determined from the sensor 2 (210, may also be indicated aa "SENSOR") and as derived from satellite data (220, also indicated herein as "SAT"). The value ΔR ref is visible on the top left in the graph, at time T₀. ΔR ref may be defined as SAT - SENSOR at T₀ and ΔR deg may be defined as SAT - SENSOR at a given moment in time after t0, such as t1 in Fig. 4.

R ref may be defined as SENSOR / SAT, or SAT / SENSOR at t₀. For illustrating the invention, R ref is taken to be SENSOR / SAT at t₀, and R deg as SENSOR / SAT at a given time, such as tl.

Both, ΔR deg and R deg may be cited as examples as a parameter related to soiling.

At t₀, R ref has generally already been established. Irradiation will be determined regularly over time, preferably at least once every period covered by the range of 1 day to 3 months (e.g. every day, once every two days, every 3 days, at least once a week, and so forth), preferably the range of 1 day to 1 month, more preferably the range of 1 day to 2 weeks.

From comparing the regularly established comparison value with the reference value R ref, one may see whether the difference between these two values changes over time. In Figure 4, the ratio SENSOR / SAT is shown to decrease with time, which is due to the overall linear reduction of irradiation as determined by sensor 2. This reduction is due to the soiling of the sensor 2 (or more precisely, of the cover 11 of the housing 9 containing sensor 2). Since the device 1 is placed in vicinity of (preferably next to) the PV modules 10, the reduction in irradiation will also apply to the PV modules 10. As a consequence of the reduction of SENSOR / SAT, R deg also decreases.

In Fig. 4, the reduction of the irradiation as observed be the sensor (line 210), compared to the constant irradiation 220 as determined from satellite data, is indicative of soiling of the PV modules. The system and/or algorithm may make use of a threshold or alarm value, indicated with the horizontal line 200 in Fig. 4, where the system is configured to output that informs the user that the PV modules should be cleaned. This information may be part of the output information 130, for example.

Regarding the operation of the system and the method of the invention, it is again referred to Figure 1. The data processing entity 110 is configured to receive the first and second data 31 and 32, from the device 1 and from the external source 50, respectively. These data relate to independently determined values with respect to the solar irradiation at the site of the PV installation 20. The system 100 comprises a computer readable medium 115, such as a database where collected and computed data may be stored. Using the algorithm 120, the system 10 determines a parameter related to soiling of the PV modules 10 of the installation 20. The system 100 is configured to generate output information 130 using the algorithm and to make this output information available, preferably via Internet, to a user. To this end, the user uses a computing device 150, such as a smartphone, tablet, laptop, and connects to the data processing entity 110 via an application software 140. The application software is preferably configured to visualize the output information 130 on an output device 160, preferably a computer screen.

In some embodiments, the present invention is related to evaluating the efficiency and/or the performance of a PV installation. For example, the system is configured to determine a performance ratio PR of the PV installation. The PR is an indication of the efficiency of the system, and the determination of the PR in accordance with the invention is an example for determining the efficiency of PV modules and/or the PV installation.

Together with the data related to soiling, the determination of the PR allows the system to identify causes of loss of performance, which may thus be due to soiling or due to other causes, in particular due to aging of components of the system, non-optimal system set-up, cabling and connection of modules.

In an embodiment, the method for determining the efficiency of a PV installation comprises obtaining the energy produced by the PV installation. The energy that is produced may be determined at a particular moment or over a predetermined period.

In an embodiment, the system 100, and preferably the data processing entity 110 is configured to receive or use data from the inverter 21 or from an electricity meter that is associated with or part of the PV installation 20. This is illustrated by the dotted arrow in Figure 1. Such data may be the electricity (or energy) produced by the PV installation, for example at a moment in time or in a particular time interval.

In an embodiment, the method for determining the efficiency of a PV installation comprises determining the energy that the PV installation can theoretically produce (the theoretical energy production).

For determining the theoretical energy production, the method and/or system preferably takes into account (1) the specifications related to the PV installation, (2) the temperature of the PV modules of the installation, and (3) the irradiation at the site of the PV installation and.

Preferably, the system 110 is fed with data concerning the PV installation, such as the power of the PV modules (generally as determined for standard conditions, generally 25°C and an irradiation of 1000 W/m²), the number of PV modules, the area of the modules. This information is available in the specification of the PV installation. This data/information is preferably entered by the user via the interface with the system 100, in particular via the internet using the computing device 150 and/or the application software 140. Also the orientation and/or inclination of the PV modules as mounted in said PV installation may or should be considered as part of the specifications.

For example, in embodiments where the data processing entity 110 comprises a webserver, the user may enter the data at the webserver. These data are preferably specific to a user and may be stored on the computer readable medium 115, along with other data, as part of a user account having defined access rights.

The data from the inverter or electricity meter 21 may also be entered manually by the user into the system 100, via a computing device 150, in case an Internet connection between the inverter 21 and the data processing entity 110 as illustrated by the dotted line in Fig. 2 is not possible.

In. Fig. 1, the dotted arrow leading from the computing device 150 to the data processing entity 110 indicates that information can be entered into the system by the user, in addition to the output information determined by the system. In Fig. 5, the double headed arrow with reference numeral 130 indicates the same.

In an embodiment, the method for determining efficiency comprises determining the theoretical energy production comprises determining solar irradiation at the site of the installation and measuring the temperature of one or more PV modules of the PV installation.

The temperature of the PV modules may be obtained by way of a temperature sensor that is provided on one or more PV module. Normally, one temperature should be sufficient. Preferably, the temperature sensor 6 of the device 1 is used to this end, since the temperature sensor 6 is provided for being connected to a PV module 10 for measuring the temperature of the same. The invention also encompasses that a temperature sensor is provided within one or more PV modules for determining the temperature of the latter.

In the method for determining the efficiency of a PV installation, the irradiation that is necessary for determining the theoretical energy production may be determined from said first data as defined elsewhere in this specification. The first data is preferably obtained from an irradiation sensor 2 which is mounted in vicinity of said installation 20, preferably in vicinity of a PV module of said installation. The irradiation sensor may also be provided within a PV module.

Alternatively, the irradiation for determining the theoretical energy production may be determined from said second data as defined elsewhere in this specification. The second data is preferably derived from information provided by a satellite, as described elsewhere in this specification.

The method for determining the efficiency of the PV installation may thus use one or both selected from said first data and/or said second data. The method may use both and use an algorithm in order to make a more accurate prediction with respect to the theoretical energy production. Preferably, said first data is used, as said first data should generally also take soiling into account.

From the data related to solar irradiation, either from the sensor 2 or satellite data 32, and also knowing the specifications of the PV installations and the electricity that was actually produced, the system is preferably configured to the performance ratio (RP = energy effectively produced / theoretical energy), which is a measure of efficiency. As mentioned, the power of the PV modules depends on the temperature of the modules, which is why the presence of temperature sensor 6 allows the system to calculate the theoretical expected energy more accurately.

In an embodiment, the system of the invention is preferably suitable and/or configured to determine efficiency and/or conduct the method of the invention for determining efficiency of the PV installation.

In an embodiment, the system of the invention is preferably suitable and/or configured to determine the temperature corrected performance ratio of the PV installation.

It is noted that the system of the invention may also be used to determine the temperature coefficient for a particular PV installation, in that this information can be derived from the change of power as a function of temperature. This coefficient may also be part of the specifications that is available to the user of a PV installation.

The present invention provides numerous advantages. In particular, by using the system of the invention, or of parts thereof, the user knows if the PV system works efficiently, if return on investment is maximized or if there is room for maximization. The user may in particular minimize the risk of malfunction of the system and the risk of production losses. The maintenance work and investments related thereto can be optimized. In particular the intervals of cleaning the PV modules can be optimized, as such cleaning is generally associated with costs and/or efforts. Furthermore, the invention allows the achievement of these advantages by relatively low costs to the user. The investment concerns the device 1 and the access and configuration of the user account on the data processing entity, preferably the webserver 110.

The system of the invention preferably allows the user to continuously monitor the performance of the PV installation and/or the soiling of PV modules.

While certain of the preferred embodiments of the present invention have been described and specifically exemplified above, it is not intended that the invention be limited to such embodiments. Various modifications may be made thereto without departing from the scope and spirit of the present invention, as set forth in the following claims. Herein below, examples of the invention are disclosed. These examples are for illustration only and are not intended to limit the scope of the present invention.

### References:

1 device
2 sensor
3 one or more solar cells
4 first temperature sensor
5 bottom or open-box-like part of device 1
6 second temperature sensor
7 electronics of device 1
8 communication module
9 casing
10 PV module
11 cover
12 other electronic components of device 1, in particular 3, 4, 6 and 7
14 cable
20 PV installation
21 inverter
31 first data
32 second data
50 server providing satellite derived information
100 system
110 data processing entity, e.g. server
115 database
   retrievable data derived from satellite
120 algorithm, computer readable instructions
130 output information
140 application software
150 computing device
160 screen or ear speaker
170 user, operator and/or owner
200 threshold value for warning
210 Irradiation measured by sensor ("SENSOR")
220 Irradiation derived from satellite data ("SAT")

## Claims

1. A system (100) for determining a parameter related to soiling of photovoltaic (PV) modules (10) of a PV installation (20), the system comprising a data processing entity (110); said data processing entity being configured to:
- receive, retrieve and/or use first data (31) related to a first solar irradiation determined at the site of said installation (20), said first data being derived from a signal produced by a local irradiation sensor (2), which is mounted in vicinity of said installation (20);
- receive, retrieve and/or use second data (32) related to a second solar irradiation at a geographic area where said installation (2) is located, said second data being derived from information provided by a satellite;
wherein said system (100) is configured to make use of an algorithm (120), said algorithm using said first and second data for determining said parameter related to soiling.

2. The system (100) of claim 1, which is configured to determine the presence of soiling if the solar irradiation derived from said first data is lower than the solar irradiation derived from said second data.

3. The system (100) of claim 1 or 2, wherein said algorithm (120) is configured to determine a reference value (R ref), wherein said reference value is preferably an initial comparison value obtained by computation from said first and second data, preferably by computing a proportion of (a) the first solar irradiation determined from said first data and (b) the solar irradiation as derived from said second data.

4. The system (100) of claim 3, wherein said reference (R ref) value is determined during a limited period of time of 1 day to 3 months, preferably when the system is put in operation and/or started-up with respect to a particular PV installation (20), by:
- collecting said first and second data during said limited period of time, and
- statistically evaluating said first and second data during said limited period of time and determining said reference value (R ref) so as to represent a stable, constant and/or reliable value resulting from the computation including said first data and said second data.

5. The system (100) of any one of the preceding claims, which is configured to repeatedly determine, during operation of the system (100), one or more subsequent comparison values (R deg) of said first and second data as determined at subsequent moments in time, and wherein a difference between said reference value (R ref) and a subsequent comparison value (R deg) is indicative of soiling of said PV modules (10).

6. The system (100) of any one of the preceding claims, which is configured to generate output information (130) selected from one, several or all of the group consisting of:
(i) absence of soiling,
(ii) presence of soiling,
(iii) a degree of soiling,
(iv) change of soiling, in particular increase of soiling, over time, and
(iv) reaching of a threshold value indicating that an extent of soiling negatively affects performance of said PV installation (20) such that cleaning of the PV modules (20) of said PV installation (20) is recommended.

7. The system (100) of any one of the preceding claims, wherein said system (100) further comprises:
- a device (1) comprising said local irradiation sensor (2);
- a computer readable medium (115) configured to make said parameter related to soiling, and in particular said output information (130), available to an owner and/or user (170) of said PV installation (20) via the internet.

8. The system (100) of any one of the preceding claims, further comprising an a web server (110), suitable for being accessible via an application software (140) of a computing device (150) comprising an output unit (160), preferably a screen (160), wherein said computing device (150) is preferably accessible by an owner and/or user (170) of said PV installation (20), said application software (140) being configured to receive output information (130) from said web-server (110) and to make said output information (130) available to said owner and/or user (170).

9. The system (100) of any one of the preceding claims, wherein said data processing entity (110) comprises a database or memory (115) and computer readable instructions for conducting said algorithm (120), wherein said data processing entity (110) is preferably configured to make available output information (130) to an application software (140) run by an owner and/or user (170) of said PV installation (20).

10. The system (100) of any one of the preceding claims, wherein said system (100) comprises a device (1) comprising said local irradiation sensor (2), wherein said device (1) is intended and/or configured to be mounted in vicinity of a particular PV module (10) of said installation (20), at the same spatial orientation as said particular PV module (10).

11. The system (100) of any one of claims 11 to 13, wherein said device (1) comprises a housing (9) comprising a transparent cover (11), wherein said irradiation sensor (2) is inside and/or attached to said housing (9), wherein said device further comprises a first temperature sensor (4) for measuring the temperature in or on said housing (9) and a optionally a second temperature sensor (6) suitable for measuring the temperature of a particular PV module (10) in vicinity to said device (1).

12. The system (100) of any one of claims 10 and 11, wherein said device (1) further comprises:
- one or more solar cells (3) for providing electricity to one or more electronic components of the device;
- electronics (7) suitable for generating said first data based on signals received from said irradiation sensor (2), said first temperature sensor (4), and optionally said second temperature sensor (6);
- a wireless communication module (8), suitable for transmitting said first data wirelessly and/or for broadcasting said data.

13. The system (1) of any one of the preceding claims, wherein said first data comprise one or more selected from the group consisting of: the short-circuit current (Isc) of the irradiation sensor (2), the temperature (T) in the device (1), the irradiation (W/m²), and optionally the temperature (Tref) in a particular PV module (10).

14. A method for determining a parameter related to soiling of one or more PV modules (10) of a PV installation (20), the method comprising:
- providing a device (1) comprising an irradiation sensor (2) in vicinity of said PV installation (20) and using said irradiation sensor (2) to generate first data related to the solar irradiation in vicinity of said PV installation (20);
- retrieving second data, said second data being related to the solar irradiation at a geographic area where said installation (20) is located, said second data being derived from information provided by a satellite;
- determining soiling of said PV modules (10) if solar irradiation as determined from said first data is lower than solar irradiation as determined from said second data.

15. A device (1) suitable for measuring solar irradiation at a site of interest, the device comprising:
- an irradiation sensor (2);
- one or more solar cells (3) for providing electricity to one or more electronic components of the device;
- a first temperature sensor (4);
- a second temperature sensor (6), said second temperature sensor being destined to produce a signal related to the temperature in a selected PV module (10) of a PV installation (20);
- electronics (7) suitable for generating first data based on signals received from one or more selected from the group of said irradiation sensor (2), said first temperature sensor (3), and said second temperature sensor (6);
- a wireless communication module (8), suitable for transmitting said first data wirelessly and/or for broadcasting said data.

16. The device (1) of claim 15, which is intended and/or configured to be mounted in vicinity of a PV module of said installation, at the same spatial orientation as one or more PV modules of said installation.

17. The device (1) of any one of claim 15 or 16, further comprising mounting equipment for attaching said device (1) or a casing (9) thereof to one selected from: (i) a particular PV module (10) of said installation (20) and (ii) to a support structure, in particular a rooftop, on which said one or more PV module (10) of said installation (20) are fixed.

18. The device (1) of any one of claims 15 to 17, wherein said first data comprise one or more selected from the group consisting of the short-circuit current (Isc), the temperature (T) in the device (1), the irradiation (W/m²), and optionally the temperature (Tref) in or of a particular PV module.

19. The device (1) of any one of claims 15-18, wherein said first data comprise the irradiation (W/m²).

20. A computer program for determining a parameter related to soiling of photovoltaic (PV) modules (10), wherein said computer program comprises instructions to compare first data related to a first solar irradiation measured at a location said PV modules (10) with second data related to said solar irradiation as determined from information provided by a satellite and to determine, from said comparison, soiling of said photovoltaic (PV) modules (10).

21. A method for determining the efficiency and preferably the performance ratio (PR) of a PV installation (20), the method comprising:
- obtaining the energy produced by the PV installation (E eff),
- determining the energy that the PV installation (20) can theoretically produce, corresponding to the theoretical energy production (E theo),
- wherein determining the theoretical energy production (E theo) comprises determining solar irradiation at the site of the installation and measuring the temperature of one or more PV modules (10) of the PV installation.
